Europäisches Patentamt

European Patent Office

Office européen des brevets

(11) Numéro de publication: **0 329 548**
**A2**

## (12) DEMANDE DE BREVET EUROPEEN

(21) Numéro de dépôt: **89400412.6**

(22) Date de dépôt: **14.02.89**

(51) Int. Cl.⁴: **A 21 C 1/04**

(30) Priorité: **19.02.88 FR 8802043**

(43) Date de publication de la demande:
**23.08.89 Bulletin 89/34**

(84) Etats contractants désignés: **DE ES FR IT**

(71) Demandeur: **DITO-SAMA**
**39 rue de Beauze**
**F-23200 Aubusson Creuse (FR)**

**LOISELET, Michel Résidence Le Chantilly**
**7, avenue du Général de Gaulle - App. 47**
**F-30100 Ales (Gard) (FR)**

(72) Inventeur: **Paturel, Bruno**
**Rue du Sentier**
**F-23200 AUBUSSON (FR)**

**Rochez, Claude**
**Farges - St Marc à Frongier**
**F-23200 AUBUSSON (FR)**

**Musseau, Joel**
**Passage Sarrazin**
**F-23200 AUBUSSON (FR)**

**Mayeux, Marcel**
**St Georges Nigremont**
**F-23500 FELLETIN (FR)**

**Loiselet, Michel**
**7, Avenue du Général de Gaulle**
**Résidence Chantilly, F-30100 ALES (FR)**

**Granoszewski, Richard**
**Place Victor Hugo**
**Trescol, F-30100 LA GRANDE COMBE (FR)**

(74) Mandataire: **Polus, Camille et al**
**c/o Cabinet Lavoix 2, Place d'Estienne d'Orves**
**F-75441 Paris Cedex 09 (FR)**

(54) **Appareil de pétrissage.**

(57) Appareil de pétrissage comportant une cuve (10) dont la partie centrale (22) semi-cylindrique coopère avec un support fixe (26) solidaire d'un bâti (14) pour permettre la rotation autour de son axe de ladite cuve. Une tête (16) articulée sur ce bâti comprenant des moyens d'entraînement (18) d'un outil de pétrissage et d'un galet d'entraînement (46), caractérisé en ce qu'il comprend un bras de centrage (20) solidaire de la tête (16) à une extrémité et portant une douille (52) à son autre extrémité (50) et en ce que le support fixe (26) est dépassant de la partie centrale (22) de la cuve de façon que la douille (52) du bras de centrage (20) coopère avec la partie dépassante (28).

FIG.1

EP 0 329 548 A2

Description

# APPAREIL DE PETRISSAGE

La présente invention a pour objet un appareil de pétrissage.

On connaît différents types de pétrins mécaniques, utilisés plus particulièrement en boulangerie, comprenant une cuve dont la partie centrale coopère avec un support fixe solidaire d'un bâti pour permettre la rotation de cette cuve autour de son axe, une tête articulée sur le bâti est munie de moyens d'entraînement d'un outil de pétrissage et d'un galet d'entraînement.

Le fonctionnement d'un tel pétrin se décompose en deux phases principales, la première dite de mélange et la seconde dite de pétrissage. Lors de la première phase, il s'agit de mélanger intimement les composants essentiels que constituent la farine et l'eau, jusqu'à ce qu'il y ait formation d'une pâte. Durant cette phase, c'est l'entraînement par galet qui est primordial car le mélange eau-farine a la consistance d'un liquide.

Lors de la deuxième phase, la formation de la pâte proprement dite contribue à augmenter sa consistance et, dans ce cas, les mouvements de l'outil dans la pâte provoquent des réactions sur la cuve qui se trouve entraînée par les mouvements de la pâte, cet entraînement devenant prépondérant par rapport à l'entraînement par galet.

Les bras de centrage connus coopèrent directement avec la partie centrale de la cuve si bien que les rotations et les efforts conduisent inévitablement à des déformations au niveau de la liaison du bras avec la partie centrale de la cuve, ce qui a pour conséquence de provoquer une certaine excentricité dans le mouvement de rotation de la cuve et donc d'impliquer des défauts dans la rotation de la cuve.

Le but de la présente invention et de pallier ces inconvénients en proposant un appareil de pétrissage comportant une cuve dont la partie centrale, sensiblement cylindrique, coopère avec un support fixe solidaire d'un bâti pour permettre la rotation de cette cuve autour de son axe, une tête articulée sur ce bâti, comprenant un ensemble moteur réducteur entraînant un outil de pétrissage, caractérisé en ce qu'il comprend un bras de centrage solidaire de la tête à une de ses extrémités et portant une douille à son autre extrémité, et en ce que le support fixe est dépassant de la partie centrale de la cuve de façon que la douille du bras de centrage coopère avec ladite partie dépassante.

L'invention sera mieux comprise à l'aide de la description qui va suivre, d'un mode de réalisation particulier donné à titre d'exemple, en regard des figures annexées, parmi lesquelles :

- la figure 1 représente une vue latérale en coupe partielle d'un appareil de pétrissage selon l'invention ;
- la figure 2 représente une coupe par un plan vertical d'un bras de centrage selon l'invention ;
- la figure 3 représente une vue en élévation latérale d'un appareil de pétrissage avec la tête en position de fonctionnement ;

- la figure 4 représente une vue des moyens d'entraînement selon la direction F de la figure 1 ; - la figure 5 est une vue en coupe d'un écran de protection pour un appareil de pétrissage selon l'invention ;
- la figure 5A est une vue détaillée de la figure 5 dans la direction de la flèche G ; - la figure 6 est une vue en coupe d'un dispositif amortisseur situé entre la tête et le bâti d'un appareil de pétrissage selon l'invention ; et
- la figure 7 est une vue en coupe partielle des moyens d'amortissement d'un déflecteur dans un appareil de pétrissage selon l'invention.

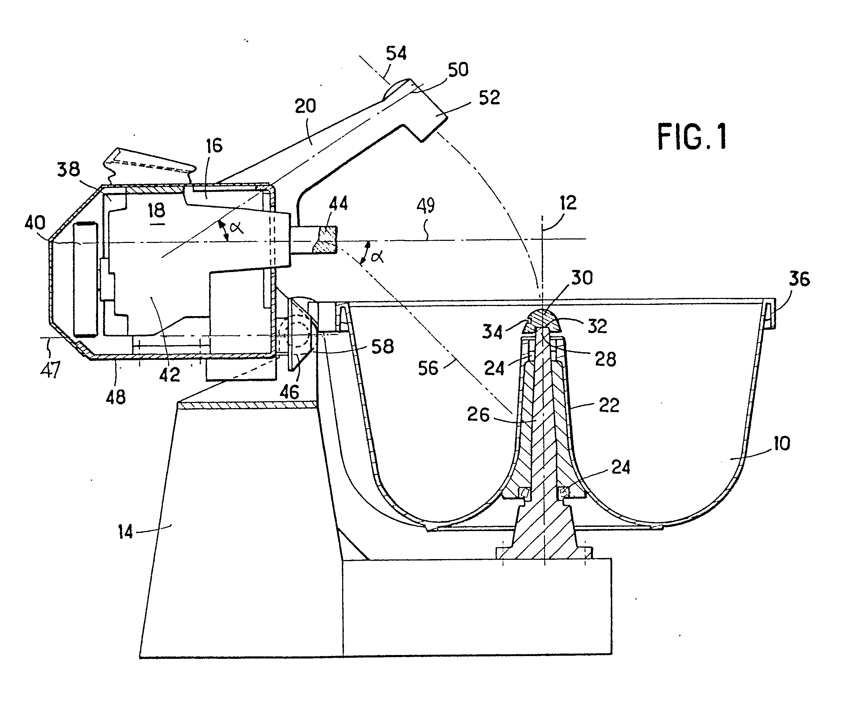

Sur la figure 1, on a représenté un appareil de pétrissage comprenant une cuve 10 montée tournante autour de son axe 12, une tête 16 comportant des moyens d'entraînement 18 et un bras de centrage 20. La cuve 10 comporte une partie centrale 22 sensiblement cylindrique disposée de façon concentrique à un support fixe 26, des paliers 24 permettant le mouvement relatif de cette partie centrale 22 par rapport au support fixe 26. Le support fixe 26 est solidaire du bâti 14. Par ailleurs, sa hauteur est supérieure à celle de la partie centrale 22 de façon que son extrémité 28 soit dépassante.

Cette extrémité dépassante 28 est filetée et reçoit un embout 30 lui même comportant un alésage non débouchant 32 également fileté. Cet embout 30 est par ailleurs muni d'un alésage borgne 34 et la forme de cet embout est tronconique.

Cette cuve 10 est également munie sur son bord périphérique extérieur d'une piste d'entraînement 36 parfaitement circulaire par rapport à l'axe de rotation 12 de la cuve.

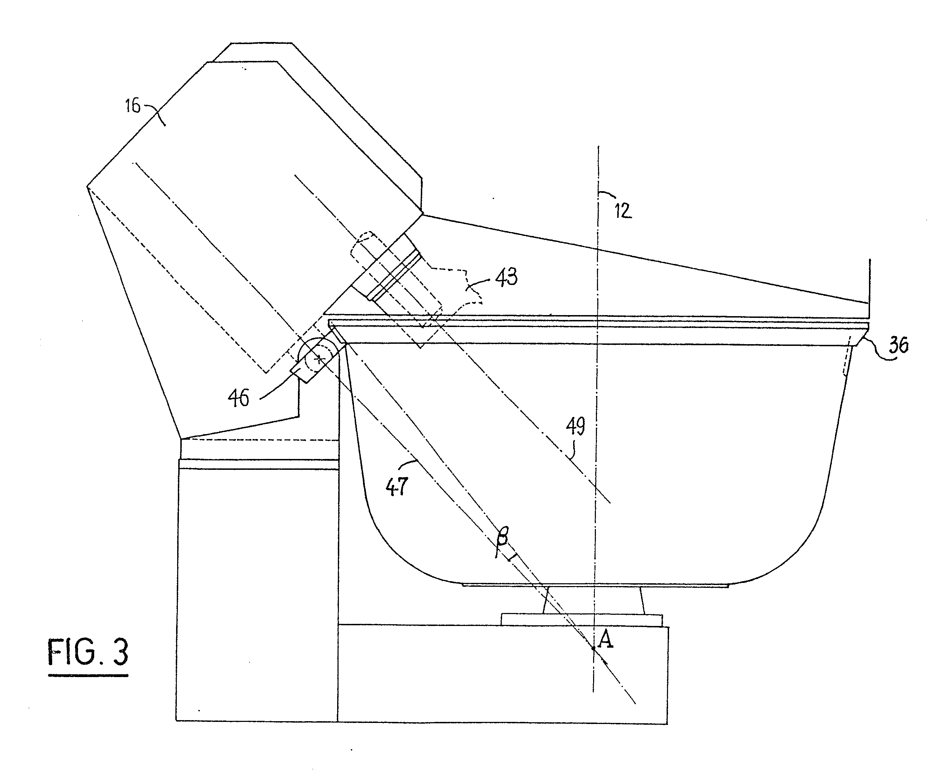

La tête 16 comprend des moyens d'entraînement 18 constitués d'un moteur 38, d'une transmission 40 et d'un réducteur 42. L'arbre de sortie 44 de ce réducteur est destiné à recevoir l'extrémité d'un outil 43 de pétrissage, représenté partiellement à la figure 3. D'autre part, ce même réducteur entraîne un galet 46 dont l'axe 47 de rotation est dans un plan parallèle à celui contenant l'axe 49 de rotation de l'outil. Les moyens d'entraînement sont fixés sur les parois du carter 48 de la tête. Le plan contenant l'axe de rotation de l'arbre 44 d'entraînement de l'outil est excentré par rapport à l'axe de rotation 12 de la cuve. Il en est de même de l'axe 47 de rotation du galet 46.

Le bras de centrage 20 est fixé sur le carter 48 de la tête 16 par une de ses extrémités tandis que l'autre extrémité 50 porte une douille 52 de forme intérieure cylindrique. L'axe longitudinal 54 de cette douille est incliné, lorsque l'appareil est au repos d'un angle $\alpha$ avec l'horizontale identique à l'angle que fait le bras 20 avec l'horizontale. Par ailleurs, l'ensemble de la tête 16 est inclinable par rapport à l'horizontale de façon que l'axe de rotation de l'arbre 44 de l'outil prenne une orientation schématisée par le trait discontinu 56 correspondant à sa position de travail, l'angle que fait l'axe de l'outil, en position de travail par rapport à l'horizontale, étant aussi égal à α, dans le cas représenté sensiblement 45°.

Le pivotement de la tête 16 par rapport au bâti 14 est autorisé par un montage de cette tête sur ce bâti à l'aide de deux chapes 58.

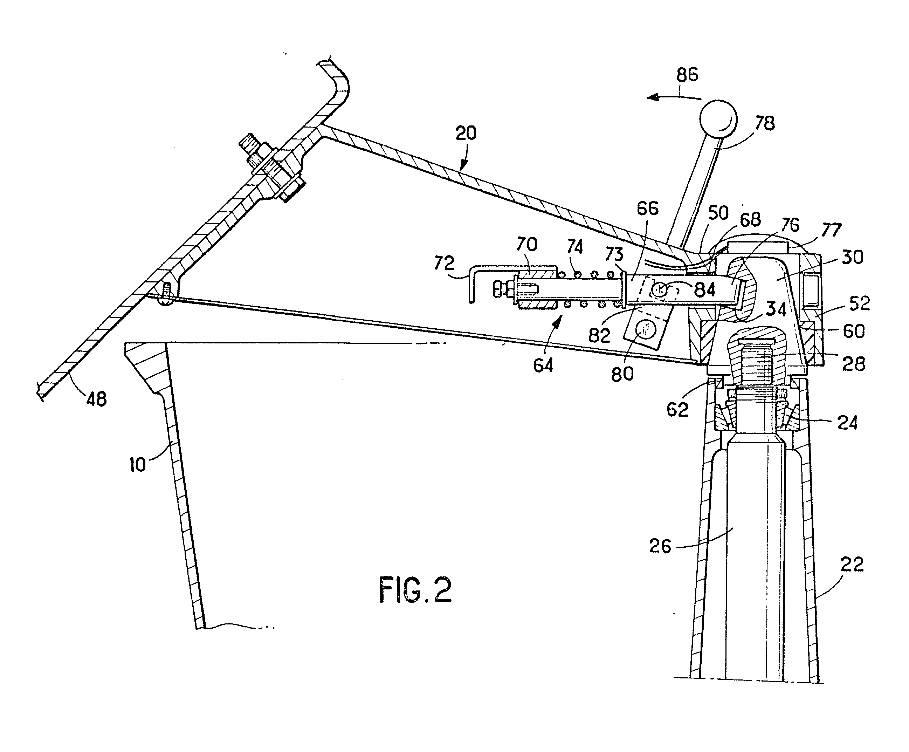

A la figure 2, on a représenté en détail le bras de centrage 20 coopérant avec la partie centrale de la cuve. L'intérieur de la douille 52 est donc en appui sur l'embout 30 sur une bague 60 en matériau de synthèse située dans la partie interne cylindrique de la douille 52 coopérant par sa forme avec la forme conique de l'embout 30. L'embout 30 est fixé sur l'extrémité 28 et des joints d'étanchéité 62 évitent toute introduction de corps étrangers entre l'embout 30 fixe et la partie centrale 22 qui est tournante.

Un dispositif de verrouillage 64 est disposé dans le bras de centrage 20 de façon à bloquer le bras de centrage par rapport à l'embout 30. Ce dispositif comporte un doigt 66 déplaçable en translation à travers un alésage débouchant 68 formant palier ménagé dans la douille 52 et un palier 70 solidaire du bras. Un ressort 74 est interposé entre le palier fixe 70 et la collerette 73 du doigt 66 de façon à solliciter ce même doigt à travers l'alésage 68 vers l'intérieur de la douille 52. L'extrémité 76 du doigt 66 formant pêne coopère avec l'alésage borgne 34 formant gâche de façon à assurer un verrouillage du bras sur l'embout 30.

Une équerre 72 joue le rôle de butée arrière du doigt pour éviter son dégagement des paliers.

Par ailleurs, ce dispositif de verrouillage est muni de moyens de déverrouillage sous la forme d'un levier 78 pivotant autour d'un axe 80 solidaire du bras de centrage 20, ce levier portant une fourchette 82 qui vient se loger de part et d'autre du doigt 66 et qui coopère avec un axe 84 porté par ce même doigt 66, le mouvement du levier 78 suivant la direction symbolisée par la flèche 86 provoquant un déplacement vers l'arrière de l'axe 84 par rapport à l'axe 80, permettant ainsi le retrait du doigt 66 de l'alésage borgne 34. Un capteur 77 situé dans la douille 52 complète cette sécurité en indiquant, par contact avec la douille 30, le bon positionnement du bras 20.

A la figure 3, on a représenté une variante de l'ensemble piste-galet et l'on a représenté de façon simplifiée l'ensemble du pétrin.

Le pétrin est représenté dans la position de travail selon laquelle l'axe de l'outil fait un angle de 45° environ avec la verticale après basculement de l'ensemble des moyens d'entraînement et de la tête 16 grâce aux chapes 58.

Le galet a une conicité telle que le point de concours A de ses génératrices est situé au-dessous du plan contenant la piste et telle que le point A appartienne à la droite confondue avec l'axe de rotation 12.

La piste 36 a sa surface de roulement orientée parallèlement à la génératrice de contact du galet. Les projections sur un même plan des axes 47, 49 de rotation, respectivement du galet 46 et de l'outil 43 sont sécantes.

Selon un cas particulier les axes du galet 46 et de l'outil 43 peuvent être parallèles. L'axe du galet est alors disposé dans un plan vertical diamétral de la cuve. Dans ce cas, les arbres d'entraînement (non figurés) du galet et de l'outil sont parallèles ce qui simplifie la disposition des moyens d'entraînement disposés dans la tête qui vont être décRits ci-après.

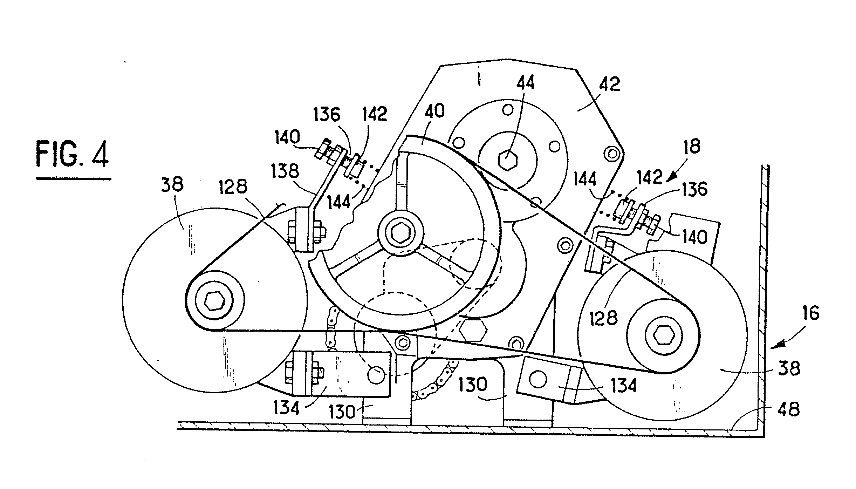

A la figure 4, on a représenté une vue des moyens d'entraînement 18 situés dans la tête 16 à l'intérieur du carter 48, dans le sens de la flèche F de la figure 1.

Ces moyens d'entraînement portent les références de la figure 1, à savoir 38 pour les moteurs, 40 pour la poulie commune d'entraînement du réducteur 42. On constate sur cette représentation que les moyens d'entraînement comportent deux moteurs 38 entraînant la même poulie 40 à l'aide de courroies 128. De façon à limiter les vibrations et à faciliter le montage, le réducteur a été fixé par deux pattes 130 directement sur le carter 48.

Les moteurs 38 sont articulés directement sur le réducteur par des pattes 134 tandis que les dispositifs 136 permettent le réglage de la position des moteurs 38 par rapport au réducteur 42 pour assurer la tension des courroies.

Ces dispositifs de réglage 136 sont constitués de plaquettes 138 solidaires du moteur muni de vis de réglage 140 qui compriment par une rondelle 142 un ressort de compression 144 disposé entre les plaquettes 138 et le réducteur 42, assurant une tension correcte des courroies en permanence.

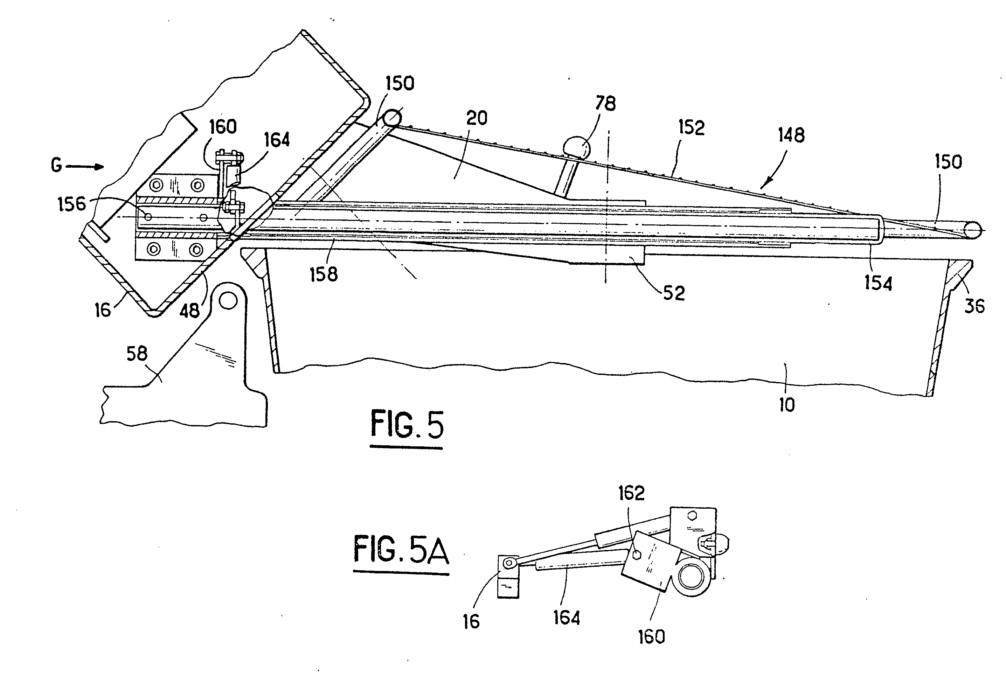

A la figure 5, on a représenté un écran de protection 148 comportant un cadre 150 et une grille 152 destinés à interdire l'accès sur la quasi totalité de la cuve 10. Ce dispositif est également équipé d'un dispositif d'amortissement et d'équilibrage en position d'ouverture.

Une tige support 154 est fixée à la tête 16 par des vis 156. Autour de cette tige on a disposé un fourreau 158 solidaire du cadre 150 mobile en rotation par rapport à la tige support 154. La tige support 154 et le fourreau 158 sont orientés sensiblement parallèlement au plan supérieur de la cuve. Sur ce fourreau 158 on a fixé une plaque 160 qui porte en 162, ainsi que cela est représenté à la figure 5A, un vérin d'amortissement 164 dont l'autre extrémité est fixée à la tête 16. La figure 5A est une vue suivant la flèche G de la figure 5. L'écran 152 et son cadre 150 pivotent donc autour de l'axe 154 pour venir, lorsque l'outil est en position de travail, dans un plan parallèle au plan supérieur de la cuve.

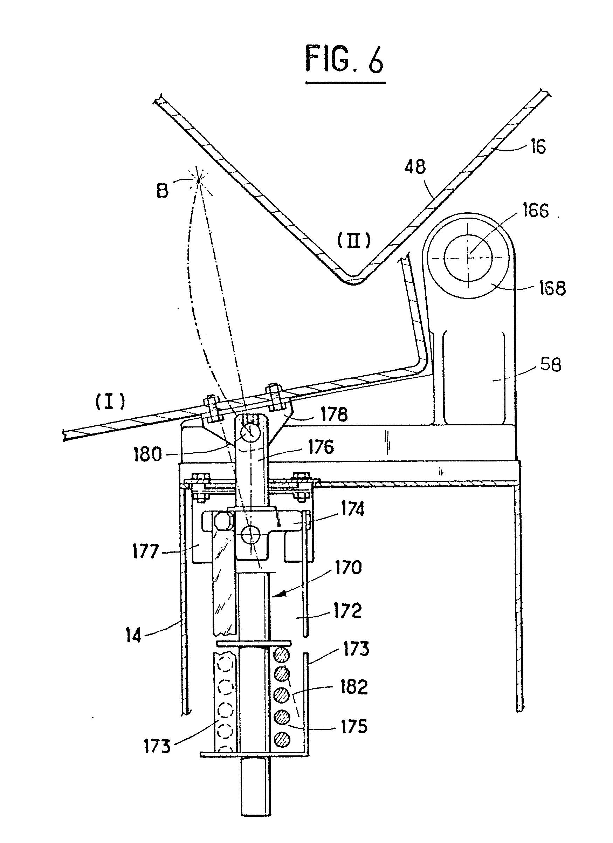

A la figure 6, on a représenté en détail la partie supérieure du bâti 14 avec l'articulation de la tête 16 par rapport à ce même bâti grâce aux chapes 58. Les positions I et II correspondent aux positions que prend la tête au repos et au travail. Le carter 48 de la tête 16 est muni d'axes 166 qui tourillonnent dans les chapes 58.

De même, un vérin d'équilibrage 170 est interposé entre le bâti 14 et la tête 16. Le corps 172 de ce vérin constitué de trois secteurs 173 à 120° est fixé au bâti 14 à l'aide d'une articulation 174 tournant dans une ferrure en U 177 tandis que le piston 176 de ce même vérin est fixé par un montage en chape 178 au carter 48 de la tête 16. Un ressort 175 assure l'équilibrage et en B on a indiqué la position que prend l'axe 180 tourillonnant dans la chape 178 lorsque la tête 16 est en position de travail (II). Le trait discontinu 182 schématise l'angle maximum que prendra le vérin 170 lors du passage de la position de repos I à la position de travail II.

Certains pétrins peuvent être équipés d'un déflecteur dont le but est d'évacuer la pâte une fois que celle-ci a été pétrie par le simple mouvement de la pâte et de la cuve par rapport à ce déflecteur, lorsqu'il est placé en position d'évacuation.

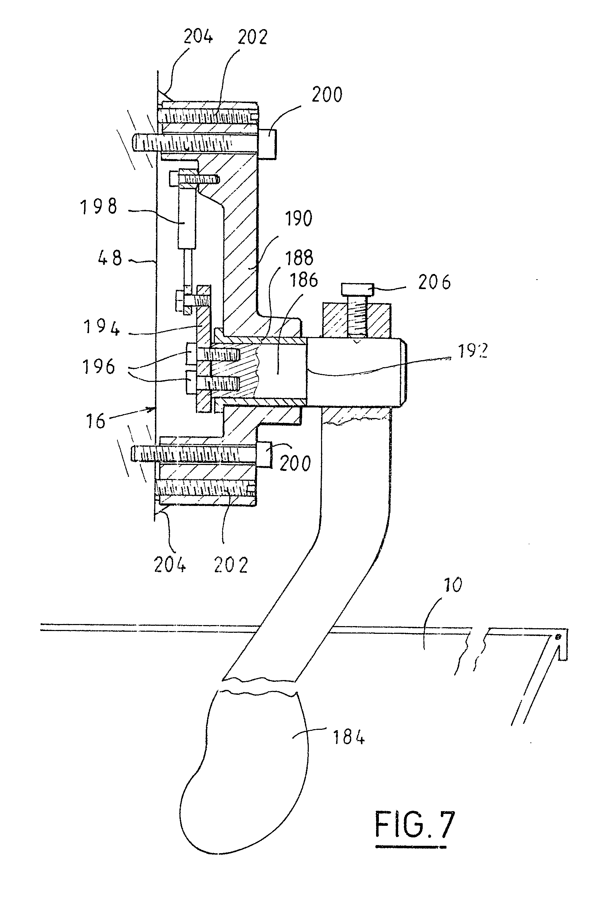

Un tel déflecteur 184 a été représenté à la figure 7 dans la position d'évacuation c'est à dire en position basse coopérant avec la cuve 10.

Un tel déflecteur 184 doit être parfaitement positionné par rapport à la cuve 10 afin que le contact entre la partie raclante et le profil intérieur de la cuve soit maintenu.

L'arbre 186 est monté dans un palier 188 solidaire du support 190. Cet arbre est maintenu fixe en translation par un épaulement 192 d'une part et par une biellette 194 fixée sur l'arbre 186 par des vis 196. Sur cette biellette 194 est fixé l'une des extrémités d'un vérin équilibreur 198 dont l'autre extrémité est fixée sur le support 190.

Le support 190 est fixé sur la paroi 48 de la tête du pétrin 16 par des vis 200 tandis que des vérins de réglage 202 permettent l'ajustement. Le joint 204 assure l'étanchéité entre le support 190 et la tête.

Le déflecteur 184 est par ailleurs muni d'une vis de pression 206 qui permet le blocage du déflecteur sur l'arbre 186. Il est aussi possible de translater le déflecteur sur l'arbre 186 donc d'ajuster la partie raclante avec la paroi interne de la cuve.

L'appareil de pétrissage selon l'invention, par son bras de centrage, qui assure un guidage parfait de la cuve en rotation, autorise la mise en oeuvre d'un dispositif de régulation de la vitesse de la cuve à l'aide d'un galet car il est possible, compte tenu de l'absence d'excentricité, de régler d'une façon extrêmement précise la pression du galet sur la piste ménagée à la périphérie de la cuve, ce réglage étant obtenu par tout moyen adéquat, la pression du galet n'étant pas modifiée par des imperfections mécaniques.

On comprend que seules les variations de vitesse en rotation seront conservées par un tel dispositif en fonction des mouvements de la pâte dans le pétrin et des mouvements de l'outil de pétrissage. Par contre le galet ne subira pas de patinages ou de frictions excessifs du fait d'irrégularités dans le mouvement de rotation de la cuve.

On constate également que l'appareil de pétrissage proposé n'engage aucun moyen particulièrement sophistiqué qui peut se révéler fragile à l'usage et coûteux en fabrication.

Un tel appareil de pétrissage est susceptible de travailler des quantités de pâte très variables ainsi que des qualités de farine très différentes répondant ainsi à la demande des professionnels.

Un autre avantage de ce dispositif réside dans sa conception modulaire qui permet un entretien et une maintenance aisés.

**Revendications**

1. Appareil de pétrissage comportant une cuve (10) dont la partie centrale (22) semi-cylindrique coopère avec un support fixe (26) solidaire d'un bâti (14) pour permettre la rotation autour de son axe de ladite cuve, une tête (16) articulée sur ce bâti comprenant des moyens d'entraînement (46), caractérisé en ce qu'il comprend un bras de centrage (20) solidaire de la tête (16) à une extrémité et portant une douille (52) à son autre extrémité (50) et en ce que le support fixe (26) est dépassant de la partie centrale (22) de la cuve de façon que la douille (52) du bras de centrage (20) coopère avec la partie dépassante (28).

2. Appareil selon la revendication 1 caractérisé en ce que le bras de centrage (20) comprend des moyens de verrouillage (64) sur la partie dépassante (28) du support fixe.

3. Appareil selon la revendication 1 ou 2 caractérisé en ce que les moyens de verrouillage (64) comprennent un doigt (66) formant pêne porté par le bras de centrage (20) et mobile en translation qui coopère avec un alésage borgne (34) d'un embout (30) fixé sur la partie dépassante (28) du support fixe (26).

4. Appareil selon la revendication 3, caractérisé en ce qu'un moyen élastique (74) est interposé entre le doigt (66) et le bras de supportage (20) de façon à solliciter ledit doigt vers l'alésage.

5. Appareil selon l'une des revendications 1 à 4, caractérisé en ce que la douille (52) comprend un capteur (77) de sécurité de façon à détecter l'engagement de la douille (52) sur l'embout (30).

6. Dispositif selon l'une quelconque des revendications précédentes, caractérisé en ce que l'axe (47) de rotation du galet (46) et l'axe (49) de rotation d'un outil (43) rotatif coopérant avec la cuve sont situés dans des plans parallèles.

7. Dispositif selon la revendication 6 caractérisé en ce que les axes (47, 49) de rotation, respectivement du galet (46) et de l'outil (43) sont parallèles.

8. Dispositif selon l'une quelconque des revendications précédentes, caractérisé en ce qu'une génératrice du galet et l'axe (47) de rotation du galet (46) sont concourants en un point (A) qui appartient à l'axe (12) de rotation de la cuve.

9. Dispositif selon l'une quelconque des revendications précédentes, caractérisé en ce que les génératrices du galet (46) et l'axe (47) de rotation de ce galet font un angle de 6°.

10. Dispositif selon l'une quelconque des revendications précédentes, caractérisé en ce que l'axe (47) de rotation du galet (46) fait un angle sensiblement de 45° avec la verticale, en position de travail.

11. Dispositif selon l'une quelconque des revendications précédentes, caractérisé en ce que la piste a une surface orientée parallèlement à la surface de roulement du galet en position de travail.

12. Appareil selon l'une quelconque des revendications précédentes caractérisé en ce que les moyens d'entraînement (18) comprennent deux moteurs (38), un réducteur (42) et une transmission (40, 128), en ce que les moyens d'entraînement sont fixés par le seul réducteur (42) au carter (48) de la tête (16).

13. Appareil selon la revendication 12, caractérisé en ce qu'un moyen de réglage (136) est interposé entre les moteurs (38) et le réducteur (42) de façon à pouvoir assurer en permanence une tension de courroie adéquate.

14. Appareil selon l'une quelconque des revendications précédentes comprenant un écran de protection (148) caractérisé en ce que la tête (16) porte une tige support (154) sur laquelle tourne le cadre (150) de la grille (152) de l'écran de protection, ladite tige support s'étendant sensiblement parallèlement au plan supérieur de la cuve.

15. Appareil selon la revendication 14, caractérisé en ce qu'un amortisseur (164) est interposé entre l'une des parois de la tête et l'écran, dans un plan sensiblement perpendiculaire au plan vertical contenant la tige support.

16. Appareil selon l'une quelconque des revendications précédentes, caractérisé en ce que la tête (16) pivote par rapport au bâti (14) par deux axes (166) tourillonnant dans deux chapes (58), des bagues élastiques (168) étant interposées entre les chapes et les axes.

17. Appareil selon l'une quelconque des revendications précédentes, caractérisé en ce que le piston (176) d'un vérin équilibreur (170) est relié à la tête (16) et en ce que le corps (172) de ce même vérin est relié au bâti (14) par une articulation (174).

18. Appareil selon l'une quelconque des revendications précédentes comprenant un support (190) fixé sur la tête (16) dans lequel est monté pivotant un arbre (186) dont une extrémité est reliée à une biellette (194) elle-même solidaire de l'extrémité d'un vérin équilibreur (198) fixé au support et dont l'autre extrémité porte un déflecteur (184) ajustable en translation sur cet arbre (186).

FIG.1

EP 0 329 548 A2

FIG.2

EP 0 329 548 A2

FIG. 3

# FIG. 4

EP 0 329 548 A2

FIG.5

FIG.5A

EP 0 329 548 A2

# FIG. 6

FIG.7